# EUROPEAN PATENT SPECIFICATION

(11) **EP 4 060 504 B1**
(45) Date of publication and mention of the grant of the patent: **21.08.2024**
(21) Application number: 20912454.4
(22) Date of filing: 08.09.2020
(51) Int. Cl.: G06F 11/30, F25D 27/00

(54) **REFRIGERATOR AND CONTROL METHOD THEREFOR**
KÜHLSCHRANK UND STEUERUNGSVERFAHREN DAFÜR
RÉFRIGÉRATEUR ET SON PROCÉDÉ DE COMMANDE

(30) Priority: 07.01.2020 CN 202010014772
(43) Date of publication of application: 21.09.2022
(73) Proprietor: Qingdao Haier Refrigerator Co., Ltd., Laoshan District Qingdao Shandong 266101 (CN); Haier Smart Home Co., Ltd., Qingdao, Shandong 266101 (CN)
(72) Inventor: ZHOU, Heng, Qingdao, Shandong 266101 (CN); HUANG, Yi, Qingdao, Shandong 266101 (CN)
(74) Representative: Ziebig Hengelhaupt Intellectual Property Attorneys Patentanwaltskanzlei PartGmbB
(86) International application number: PCT/CN2020/114072
(87) International publication number: WO 2021/139196

(56) References cited:
- EP-A1- 1 445 560
- EP-A1- 1 887 298
- CH-A2- 713 404
- CN-A- 105 091 454
- CN-A- 105 953 523
- CN-A- 106 016 952
- CN-A- 106 052 296
- CN-A- 106 052 297
- CN-A- 110 531 687
- CN-A- 110 595 150
- CN-A- 111 258 858
- DE-A1- 102011 115 146
- DE-A1- 102013 209 806
- JP-A- 2017 194 179
- US-A1- 2009 052 160
- US-A1- 2012 014 090
- US-A1- 2014 268 646
- US-A1- 2016 195 328
- US-A1- 2018 106 523

## Description

### FIELD OF THE INVENTION

The present invention relates to a refrigerator, and particularly to a refrigerator and a control method thereof.

### BACKGROUND OF THE INVENTION

Storage environments of some refrigerators in prior art are determined comprehensively by various state parameters. The state parameter is a kind of data. When needing to check the storage environment, a user needs to obtain multiple pieces of different data from multiple different channels. The process is complex, the efficiency is low, and an intuitive checking effect cannot be provided for the user.

Therefore, how to present the state parameters of a storage environment in a refrigerator to a user conveniently, efficiently, and intuitively becomes a technical problem urgent to be solved by those skilled in the art.

US 2016/106523 A1 discloses refrigerator appliances, and more particularly systems and methods for tracking and preserving a food inventory in a refrigerator appliance.

DE 10 2013 209606 A1 also relates to refrigerators comprising freezers with a certain control method.

US 2016/195328 A1 teaches a storage apparatus, comprising: a storage element for storing goods, a detection device for detecting whether said storage element is occupied by the goods, an illumination device for illuminating said storage element and the goods stored on at least one of said storage element for the goods, and a control device for actuating said illumination device depending on a result of a detection process in respect of whether said storage element is occupied by any of the goods.

### BRIEF DESCRIPTION OF THE INVENTION

An objective of the present invention is to provide a refrigerator and a control method thereof, so as to at least solve any aspect of the foregoing technical problem. The claimed subject-matter is defined by independent claims 1 and 3. Preferred embodiments of the invention are claimed within the dependent claim 2.

A further objective of the present invention is to present a storage environment in a refrigerator to a user conveniently, efficiently, and intuitively.

A further objective of the present invention is to improve the operational reliability of a refrigerator.

A further objective of the present invention is to reduce the manufacturing cost of a refrigerator.

Another further objective of the present invention is to enable a refrigerator to determine automatically an available position for an object to be stored, thereby implementing the intelligent storage of the refrigerator.

### BRIEF DESCRIPTION OF THE DRAWINGS

In the following part, some specific embodiments of the present invention will be described in detail in an exemplary rather than limited manner with reference to the accompanying figures. The same reference numerals in the accompanying figures indicate the same or similar components or parts. Those skilled in the art should understand that these accompanying figures are not necessarily drawn to scale. In the figures:
FIG. 1 is a schematic block diagram of a refrigerator according to an embodiment of the present invention.
FIG. 2 is a schematic diagram of a control method for a refrigerator according to an embodiment of the present invention.
FIG. 3 is a flowchart of controlling a refrigerator according to an embodiment of the present invention.

### DETAILED DESCRIPTION

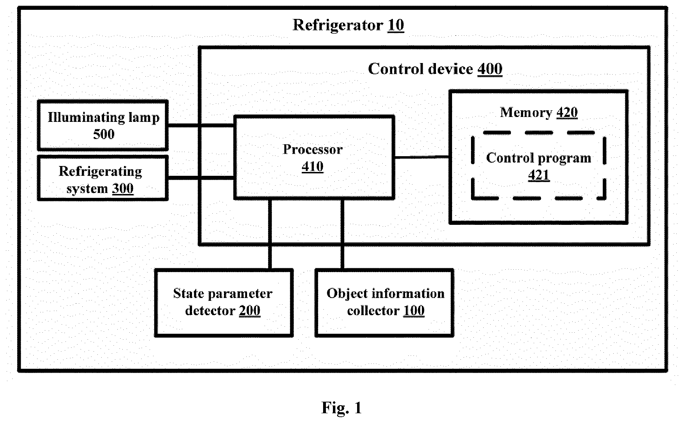

FIG. 1 is a schematic block diagram of a refrigerator 10 according to an embodiment of the present invention.

The refrigerator 10 may generally include a cabinet, an illuminating lamp 500, a refrigerating system 300, and a control device 400. The refrigerating system 300 may be a common compression refrigerating system 300, and provides a cold energy for a storage compartment in, for example, air cooling and/or direct cooling manners, such that the storage compartment has an expected storage temperature.

The storage compartment is formed in the cabinet. A door body configured to open or close the storage compartment may be arranged on the cabinet. In the present embodiment, there may be multiple storage compartments, at least including a freezing compartment and a refrigerating compartment. The refrigerating compartment may include a dry-region compartment, a wet-region compartment, and/or a low-oxygen compartment. The freezing compartment may include a fresh food compartment, a coarse cereal compartment, and a dessert compartment. In some optional embodiments, there may be one storage compartment, and a function or type of the storage compartment may be set as practically needed.

The illuminating lamp 500 is arranged in the storage compartment, is configured to present a light effect adapted to state parameters inside the storage compartment when in operation, and is further configured to illuminate the storage compartment when in operation. There may be one or more illuminating lamps 500 in the storage compartment.

The refrigerator 10 may be provided with a transparent door body. Alternatively, at least one transparent window may be formed in the door body of the refrigerator 10, and one transparent window corresponds to one storage compartment, so that a user may observe a situation inside each storage compartment through the transparent window. According to the refrigerator 10 of the present embodiment, based on this, the user may observe the light state of the illuminating lamp 500 in the storage compartment through the transparent window without opening the door body of the refrigerator 10, or determine the storage compartment illuminated by the illuminating lamp 500 through the transparent window.

The refrigerator 10 may further have a display screen and a speech device for interacting with the user, as well as a network transmission function. In some embodiments, the refrigerator 10 may be provided with a touch screen with an operating system on the door body, and may perform data interaction with other devices or a network cloud device through wireless fidelity (Wi-Fi), general packet radio service (GPRS), Bluetooth, or other transmission modes. According to the refrigerator 10 of the present embodiment, based on this, the refrigerator 10 may receive a storage environment checking command or object storage command given by the user in multiple different ways such as the touch screen, the speech device, or a mobile device. In some other optional embodiments, the refrigerator 10 may further include a human infrared detector, arranged on the door body of the refrigerator 10 and configured to obtain a human infrared signal near the refrigerator 10.

The refrigerator 10 may further include a state parameter detector 200, arranged in the storage compartment, e.g., on an inner wall of the storage compartment, and configured to detect state parameters inside the refrigerator 10 to obtain related information. The state parameters inside the refrigerator 10 refer to state parameters of the storage compartment in the refrigerator 10, and are used for representing whether a storage environment in the storage compartment is good or bad. The state parameters comprise temperature, humidity and gas composition. Gas composition may at least include oxygen content, nitrogen content, and carbon dioxide content. When there are multiple storage compartments, different target storage environments may be preset for different storage compartments, and an object in each storage compartment may be stored therein according to the preset target storage environment. The state parameter detector 200 may be the same as the storage compartment in number, and is configured to detect the various state parameters in the storage compartment. In some optional embodiments, there may be multiple state parameter detectors 200 in one storage compartment, including a temperature sensor, a humidity sensor, and a gas concentration sensor, which are configured to detect temperature, humidity, and gas composition in the storage compartment respectively.

The refrigerator 10 may further include an object information collector 100. The object information collector 100 collects information of an object to be stored after the refrigerator 10 receives an object storage command. The object information collector 100 may be arranged on the door body. The object information collector 100 may include a camera and a radio frequency identification (RFID) reader. Object attribute information, such as category, specification, weight, and shelf life, of the object to be stored at an outer side of the refrigerator 10 is obtained by shooting, by the camera, an image for image recognition and reading, by the RFID reader, label information (RFID or identification code) of the object, or in other manners.

The control device 400 is provided with a memory 420 and a processor 410. A control program 421 is stored in the memory 420. When being executed by the processor 410, the control program 421 is used for implementing a control method for a refrigerator in any one of the following embodiments. The processor 410 may be a central processing unit (CPU), a digital signal processor (DSP), or the like. The memory 420 is configured to store a program executed by the processor 410. The memory 420 may be, but not limited to, any medium that may be configured to carry or store an expected program code in an instruction or data structure form and accessed by a computer. Alternatively, the memory 420 may be a combination of various memories 420. The control program 421 is executed by the processor 410 to implement each process in the following method embodiments with the same technical effects, and thus elaborations are omitted to avoid repetitions.

By the following method, the refrigerator 10 of the present embodiment adjusts the light state of the illuminating lamp 500 according to the state parameters inside the refrigerator 10 when the wake-up instruction for the illuminating lamp 500 is the storage environment checking command received by the refrigerator 10, such that the user may know a storage environment in the refrigerator 10 according to the light state of the illuminating lamp 500. Because the state parameters may reflect an actual storage environment in the refrigerator 10 from multiple aspects, by reflecting the state parameters inside the refrigerator 10 with the light state, the user may determine a state of the storage environment through an intuitive visual perception. The method is simple and efficient, analysis and comparison of each piece of data is avoided, and the user experience and the intelligence degree are improved.

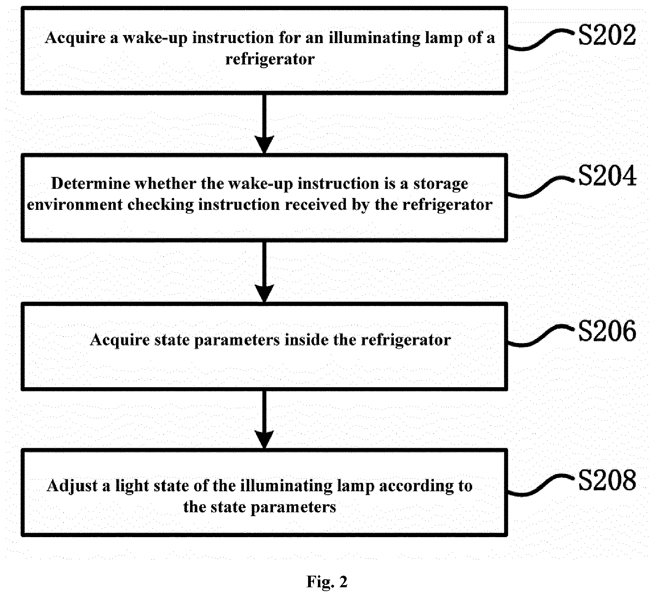

FIG. 2 is a schematic diagram of a control method for the refrigerator 10 according to an embodiment of the present invention. The control method for the refrigerator 10 may generally include the following steps.

Step S202, a wake-up instruction for an illuminating lamp 500 of the refrigerator 10 is acquired.

When the refrigerator 10 is in a still state, the illuminating lamp 500 is in an off state. The still state refers to a state that the door body of the refrigerator 10 is kept closed and the refrigerator 10 does not receive any instruction given by a user. The illuminating lamp 500 may be switched to a standby state after receiving the wake-up instruction. The illuminating lamp 500 in the standby state may be switched to an operating state and emit light after receiving a start-up instruction sent by a processor 410.

Step S204, whether the wake-up instruction is a storage environment checking command received by the refrigerator 10 is determined.

The wake-up instruction may at least include a storage environment checking command received by the refrigerator 10 and an object storage command received by the refrigerator 10.

The storage environment checking command may be a human infrared signal detected by a human infrared sensor of the refrigerator 10, or a storage environment checking operation instruction sent by the user to the refrigerator 10 through a speech device, a touch screen, or a mobile device. In some other optional embodiments, the storage environment checking command may be a triggering signal that the door body of the refrigerator is opened. The object storage command may be an object storage operation instruction sent by the user to the refrigerator 10 through the speech device, the touch screen, or the mobile device.

If the wake-up instruction is a storage environment checking command received by the refrigerator 10, it indicates that the user has no object storage need but needs to check whether the storage environment reaches a set target storage environment requirement. If the wake-up instruction is an object storage command received by the refrigerator 10, it indicates that the user needs to put an object to be stored in the refrigerator 10 for storage.

Step S206, state parameters inside the refrigerator 10 are acquired in case that the wake-up instruction is a storage environment checking command received by the refrigerator 10.

There may be multiple state parameters. The state parameters comprise -temperature, humidity, and gas composition. Gas composition may at least include oxygen content, nitrogen content, and carbon dioxide content.

The step that state parameters inside the refrigerator 10 are acquired may include that: characteristic parameters of a storage compartment in the refrigerator 10 are acquired, and state parameters of the storage compartment corresponding to the characteristic parameters of the storage compartment are acquired. Characteristic parameters of the storage compartment are detected by a state parameter detector 200 to obtain the state parameters of the storage compartment.

Step S208, a light state of the illuminating lamp 500 is adjusted according to the state parameters. The step that a light state of the illuminating lamp 500 is adjusted according to the state parameters may include that: multiple state parameters are matched to obtain a target light effect adapted to the state parameters, and the illuminating lamp 500 is driven to emit light according to the target light effect.

Because the state parameters reflect an actual storage environment in the refrigerator 10 from multiple aspects, by reflecting the state parameters inside the refrigerator 10 with the light state, the user may determine a state of the storage environment by an intuitive visual perception. The method is simple and efficient, analysis and comparison of each piece of data is avoided, and the user experience and the intelligence degree are improved. The storage environment is determined by an operating state of the refrigerator 10, and the user may know the state of the storage environment conveniently, efficiently, and intuitively, and when the whole or a part of storage environment in the refrigerator 10 does not meet a preset requirement, the user may be prompted by a specific light state to adjust the operating state of the refrigerator 10. Therefore, the operational reliability of the refrigerator 10 is improved. As the state parameters comprise temperature, humidity, and gas composition (i.e., content of a specific gas in gas composition), the step that multiple state parameters are matched to obtain a target light effect adapted to the state parameters includes that: a hue, brightness, and saturation of a light color are determined according to temperature, humidity, and content of a specific gas in the gas composition in the refrigerator 10, respectively.

The step that a hue, brightness, and saturation of a light color are determined according to temperature, humidity, and content of a specific gas in the gas composition in the refrigerator 10 respectively includes that: the temperature is matched with multiple preset temperature threshold ranges, and the hue is determined according to the temperature threshold range that the temperature belongs to, a corresponding hue being pre-configured for each of the temperature threshold ranges; the humidity is matched with multiple preset humidity threshold ranges, and the brightness is determined according to the humidity threshold range that the humidity belongs to, corresponding brightness being pre-configured for each of the humidity threshold ranges; and the content of the specific gas in the gas composition is matched with preset content threshold ranges of the gas, and the saturation is determined according to the content threshold range that the content of the specific gas belongs to, a corresponding saturation being pre-configured for each of the content threshold ranges.

Hue, brightness, and saturation are three characteristics of color, and the three characteristics determine a presentation effect of color together as three elements of color. Any colored light seen by human eyes is a comprehensive effect of the three characteristics.

Hue refers to an appearance of color, and is the best standard for distinguishing various colors. It is unrelated to the intensity and brightness/darkness of color, and purely identifies a difference between appearances only. A difference between colors is determined by a difference between wavelengths of light. Hue refers to conditions of colors of these different wavelengths. The wavelength of red is the largest, and the wavelength of purple is the smallest.

Brightness refers to the brightness/darkness of color. Brightness is calculated based on a gray-scale test card. Black corresponds to 0, white corresponds to 10, and 9 stages are arranged at equal intervals between 0 and 10. Colors may be divided into chromatic colors and achromatic colors, but the latter still has brightness. For chromatic colors, there are position values corresponding to the brightness and darkness of each color on the gray-scale test card.

Saturation, also referred to as purity or chroma, refers to the bright degree of color, i.e., a ratio of a chromatic component to achromatic component (i.e., gray) in color. This ratio determines the saturation and bright degree of color. When a certain color includes many chromatic components, the color presents a saturated (strong color vision) and bright effect, and visually impresses a person strongly. Otherwise, when a certain color includes many achromatic components, the color is unsaturated and dim, and presents a reduced visual effect. The bright or distinct degree of color represented by a numerical value is referred to as chroma. Various chromatic colors have chroma values, and chroma values of achromatic colors are 0. Chromas (purity) of chromatic colors are distinguished by calculation according to ratios of gray in the colors.

For example, there may be two preset temperature threshold ranges, including a first temperature threshold range and a second temperature threshold range. The first temperature threshold range is a reasonable temperature range corresponding to a storage temperature required by the target storage environment. When the temperature in the storage compartment is within the reasonable temperature range, it indicates that the temperature in the storage compartment meets a requirement of the set target storage environment and needs not to be adjusted. The second temperature threshold range is an unreasonable temperature range which does not correspond to the storage temperature required by the target storage environment. If the temperature in the storage compartment is not within the first temperature threshold range, it indicates that the temperature in the storage compartment is within the second temperature threshold range, and the temperature in the storage compartment does not meet the requirement of the set target storage environment, and needs to be adjusted.

Each of the temperature threshold ranges corresponds to a hue. That is, if the temperature threshold ranges are different, hues are different. A first temperature hue, e.g., green, may be pre-configured for the first temperature threshold range, and a second temperature hue, e.g., red, may be pre-configured for the second temperature threshold range. When the temperature in the storage compartment is within the preset first temperature threshold range, it is determined that the hue of the light color of the illuminating lamp 500 is green. When the temperature in the storage compartment is within the preset second temperature threshold range, it is determined that the hue of the light color of the illuminating lamp 500 is red. Whether the temperature in the storage compartment meets the storage requirement may be determined conveniently and efficiently according to different hues.

Alternatively, there may be three, four, five, six, or seven preset temperature threshold ranges. There may be two, three, four, or five preset humidity threshold ranges and two, three, four, or five preset content threshold ranges. The present invention is not limited thereto, and examples will not be listed herein one by one.

By using the method, the refrigerator 10 of the claimed invention determines the hue, brightness, and saturation of the light color according to the temperature, humidity, and gas composition in the storage compartment respectively, thereby obtaining the target light effect adapted to the state parameters. Specific state parameters are matched with specific color attributes respectively. That is, the temperature parameter is matched with the hue, the humidity parameter is matched with the brightness, and the gas composition is matched with the saturation. As such, the user may simultaneously obtain multiple different state parameters according to the color effect. Moreover, a use requirement can be met by arranging only one illuminating lamp 500 in the refrigerator 10, so that the hardware cost of the refrigerator 10 is reduced.

In an example not part of the present invention, the step that multiple state parameters are matched to obtain a target light effect adapted to the state parameters may include that: the multiple state parameters are matched with corresponding state parameter threshold ranges respectively to obtain a light color corresponding to each of the state parameters; and the illuminating lamp 500 is enabled to emit light alternately at intervals in the light color corresponding to each of the state parameters according to a preset sequence, thereby forming the target light effect.

The step that the multiple state parameters are matched with corresponding state parameter threshold ranges respectively to obtain a light color corresponding to each of the state parameters may include that: the corresponding light color is determined according to the state parameter threshold range that each of the state parameters belongs to.

Here, the "light color" may refer to a hue of a color of light emitted by the illuminating lamp 500. That is, by using the control method, the refrigerator 10 of the present embodiment may enable the user to determine whether the storage environment is good or bad according to the hue of the light.

There may be multiple state parameters and one illuminating lamp 500. Taking three state parameters of temperature, humidity, and oxygen content as an example, after the three state parameters of temperature, humidity, and oxygen content are acquired, each of the state parameters is matched with corresponding state parameter threshold ranges to obtain a light color of the illuminating lamp 500 corresponding to each of the state parameters according to the state parameter threshold range that each of the state parameters belongs to. The target light effect is determined to be that the illuminating lamp 500 emits light alternately in the light color corresponding to each of the state parameters according to a preset sequence and a preset time interval.

The state parameter threshold range corresponding to the temperature parameter is a temperature threshold range. The state parameter threshold range corresponding to the humidity parameter is a humidity threshold range. The state parameter threshold range corresponding to the oxygen content is an oxygen content range. There may be multiple state parameter threshold ranges corresponding to each of the state parameters.

Taking the humidity threshold range as an example, there may be three humidity threshold ranges, including a first humidity threshold range, a second humidity threshold range, and a third humidity threshold range. The first humidity threshold range is a reasonable humidity range (the reasonable humidity range refers to a humidity variation range meeting the requirement of the target storage environment). The second humidity threshold range is an adjustable humidity range (the adjustable humidity range refers to a humidity variation range that is not within the humidity variation range required by the target storage environment but may be recovered into the humidity variation range required by the target storage environment within set time in case that a dehumidification device of the refrigerator 10 is started). The third humidity threshold range is a severe humidity range (the severe humidity range refers to a humidity variation range that is not within the humidity variation range required by the target storage environment and may not be recovered into the humidity variation range required by the target storage environment within set time in case that the dehumidification device of the refrigerator 10 is started).

Each of the humidity threshold ranges may correspond to a hue. That is, if humidity threshold ranges are different, hues are different. For example, a first humidity hue, e.g., green, is pre-configured for the first humidity threshold range; a second humidity hue, e.g., yellow, is pre-configured for the second humidity threshold range; and a third humidity hue, e.g., red, is pre-configured for the third humidity threshold range. When the humidity in the storage compartment is within the first humidity threshold range, it is determined that the light color of the illuminating lamp 500 is green. When the humidity in the storage compartment is within the second humidity threshold range, it is determined that the light color of the illuminating lamp 500 is yellow. When the humidity in the storage compartment is within the third humidity threshold range, it is determined that the light color of the illuminating lamp 500 is red. Whether the humidity in the storage compartment meets the storage requirement may be determined conveniently and efficiently according to different hues of the light color.

There may be three, or two, four, or five preset temperature threshold ranges and oxygen content threshold ranges respectively. Examples will not be listed herein one by one.

For example, the preset sequence may be temperature, humidity, and oxygen content, and the preset time interval may be 1 s, 1.5 s, or 2 s, preferably 1.5 s. After entering an operating state, the illuminating lamp 500 emits light corresponding to the temperature threshold range that the temperature parameter belongs to, then emits light corresponding to the humidity threshold range that the humidity parameter belongs to 1.5 s later, and then emits light corresponding to the oxygen content threshold range that the oxygen content parameter belongs to 1.5 s later.

By using said method, not part of the present invention, the refrigerator 10 of the present embodiment may determine, according to the multiple state parameters inside the storage compartment, the light color corresponding to each of the state parameters, and then drive the illuminating lamp 500 to emit light for representing each of the state parameters alternately according to the preset sequence. Therefore, the user may simultaneously obtain multiple different state parameters according to the color effect. Moreover, a use requirement can be met by arranging only one illuminating lamp 500 in the refrigerator 10, so that the hardware cost of the refrigerator 10 is reduced.

In some other examples, not part of the present invention, there may be multiple state parameters and multiple illuminating lamps 500, and the number of the illuminating lamps 500 may be the same as that of the state parameters. Each of the illuminating lamps 500 corresponds to a state parameter. The step that multiple state parameters are matched to obtain a target light effect adapted to the state parameters may further include that: the multiple state parameters are matched with corresponding state parameter threshold ranges respectively to obtain a light effect corresponding to each of the state parameters; and the multiple illuminating lamps 500 are enabled to emit light according to the light effect corresponding to one state parameter respectively, thereby forming the target light effect.

Taking three state parameters of temperature, humidity, and oxygen content as an example, not part of the present invention, there may be three illuminating lamps 500, and after the three state parameters of temperature, humidity, and oxygen content are acquired, each of the state parameters is matched with corresponding state parameter threshold ranges to obtain a light color of the illuminating lamp 500 corresponding to each of the state parameters according to the corresponding state parameter threshold range that each of the state parameters belongs to. The target light effect is determined to be that each of the illuminating lamps 500 emits light matched with the corresponding state parameter. That is, the three illuminating lamps 500 may emit light at the same time, and a storage environment feature represented by each of the state parameters may be determined according to the light color of each of the illuminating lamps 500. Therefore, the intuition of the user is enhanced, and color recognition difficulties for the user are reduced.

The present invention is applicable to a refrigerator 10 with at least one storage compartment, preferably to a refrigerator 10 with multiple storage compartments, and each of the storage compartments is provided with an illuminating lamp 500. After the refrigerator 10 receives a storage environment checking command given by a user, the state parameter detector 200 in each of the storage compartments may collect a state parameter according to a set characteristic parameter respectively. In some optional embodiments, the state parameter detector 200 may collect all state parameters. Each state parameter inside each storage compartment is matched with corresponding state parameter thresholds respectively. A target light effect of each storage compartment is determined according to the state parameter threshold that each state parameter belongs to. Then, the illuminating lamp 500 in each storage compartment is driven to emit light according to the corresponding target light effect.

In an example, not part of the present invention, the control method may further include the following steps.

In case that the wake-up instruction is an object storage command received by the refrigerator 10, label information of an object to be stored or image information of the object to be stored is acquired to obtain attribute information of the object to be stored.

State parameters inside the multiple storage compartments are acquired. An available storage compartment for the object to be stored is determined according to the attribute information and the state parameters inside the multiple storage compartments. The illuminating lamp 500 in the available storage compartment is turned on.

When the wake-up instruction includes a storage environment checking command and an object storage command, the wake-up instruction is the object storage command received by the refrigerator 10 if it is not the storage environment checking command received by the refrigerator 10.

The refrigerator 10 may obtain the attribute information of the object to be stored through an object information collector 100 by reading the label information on the object to be stored or performing image recognition on the object to be stored. For example, the refrigerator 10 may determine the attribute information of the object to be stored by an RFID reader by reading a label of the object to be stored. For another example, the refrigerator 10 may determine the information of the object to be stored by a camera by shooting image information of the object to be stored.

The step that an available storage compartment for the object to be stored is determined according to the attribute information and the state parameters inside the multiple storage compartments includes that: a preset storage condition of the object to be stored is determined according to the attribute information; the state parameters of the multiple storage compartments are matched with the preset storage condition to obtain storage priorities of the multiple storage compartments; and the storage compartment with the highest storage priority is determined as the available storage compartment.

In an example, not part of the present invention, there may be multiple state parameters. Types and numbers of state parameters inside the storage compartments may be configured to be the same or different. A state parameter detector 200 may be arranged in each storage compartment. Each state parameter detector 200 acquires the state parameters inside each storage compartment. A controller may extract a numerical value of each state parameter inside each storage compartment. The numerical value of each state parameter is input into a preset multidimensional state parameter quality evaluation model (there may be multiple multidimensional state parameter quality evaluation models, and one multidimensional state parameter quality evaluation model may be determined according to the attribute information of the object to be stored), so as to obtain state parameter quality evaluated by the multidimensional state parameter quality evaluation model. The storage priorities of the multiple storage compartments are determined according to a magnitude sequence of the state parameter quality. In this storage priority determination manner, the storage compartment where an actual storage environment is most suitable for storing the object to be stored may be reflected accurately, which contributes to selecting the best available storage compartment.

By using the example method, not part of the present invention, when the wake-up instruction for the illuminating lamp 500 is an object storage command received by the refrigerator 10, and there are multiple storage compartments, the refrigerator 10 of the present embodiment may determine whether there is any available storage compartment for the object to be stored according to the attribute information of the object to be stored and the state parameters inside the multiple storage compartments, and if there is an available storage compartment for the object to be stored, turns on the illuminating lamp 500 in the available storage compartment. Therefore, the user may open a door body of the available storage compartment under the guide of the light, and put the object to be stored in the available storage compartment. The refrigerator 10 of said example, not part of the present invention, may determine automatically an available position for an object to be stored, thereby implementing the intelligent storage of the refrigerator 10, and may also reduce or prevent the user from looking for the available position manually. Since the user does not need to open and close door bodies of the multiple storage compartments repeatedly, the energy consumption of the refrigerator 10 is reduced, and the storage efficiency and storage quality of the object are improved.

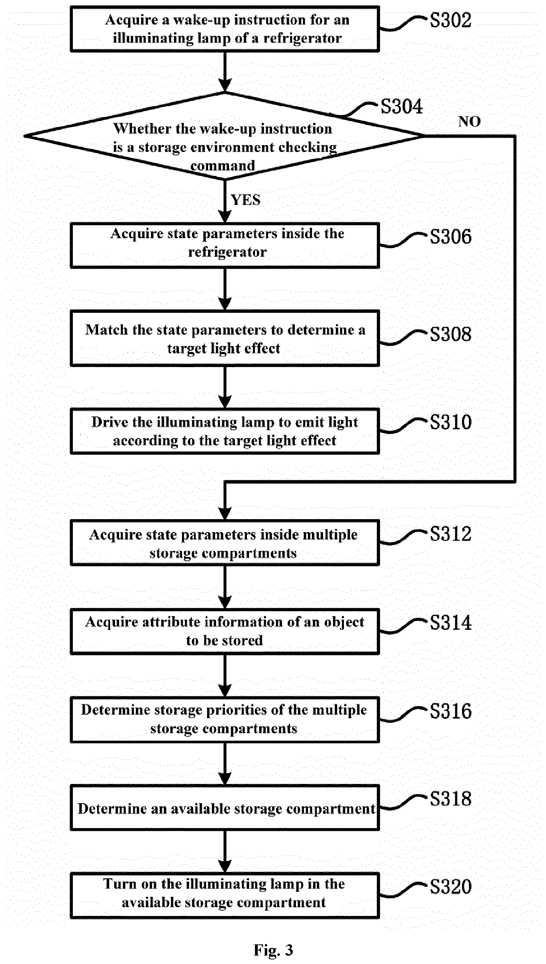

FIG. 3 is a flowchart of controlling a refrigerator 10 according to an embodiment of the present invention.

Step S302, a wake-up instruction for an illuminating lamp 500 of the refrigerator 10 is acquired. The wake-up instruction may include a storage environment checking command received by the refrigerator 10 and an object storage command received by the refrigerator 10.

Step S304, whether the wake-up instruction is a storage environment checking command received by the refrigerator 10 is determined. If YES, step S306 is performed. If NO, step S312 is performed.

Step S306, state parameters inside the refrigerator 10 are acquired. There may be multiple state parameters. The state parameters comprise temperature, humidity, and gas composition. Gas composition may at least include oxygen content, nitrogen content, and carbon dioxide content.

Step S308, the multiple state parameters are matched to obtain a target light effect adapted to the state parameters. Matching the multiple state parameters refers to determining a state parameter threshold range that each of the state parameters belongs to. A target light effect is determined according to the state parameter threshold range that each of the state parameters belongs to.

When a target storage environment of a storage compartment has set requirements for temperature, humidity, and content of a specific gas in gas composition, the step that the multiple state parameters are matched to obtain a target light effect adapted to the state parameters includes that: temperature is matched with multiple preset temperature threshold ranges, and a hue is determined according to the temperature threshold range that the temperature belongs to, a corresponding hue being pre-configured for each of the temperature threshold ranges; humidity is matched with multiple preset humidity threshold ranges, and brightness is determined according to the humidity threshold range that the humidity belongs to, corresponding brightness being pre-configured for each of the humidity threshold ranges; and a content of a specific gas in a gas composition is matched with preset content threshold ranges of the gas, and a saturation is determined according to the content threshold range that the content of the specific gas belongs to, a corresponding saturation being pre-configured for each of the content threshold ranges.

In an example, not part of the present invention, when there is one illuminating lamp 500 in the storage compartment, the step that the multiple state parameters are matched to obtain a target light effect adapted to the state parameters may further include that: the multiple state parameters are matched with corresponding state parameter threshold ranges respectively to obtain a light color corresponding to each of the state parameters; and the illuminating lamp 500 is enabled to emit light alternately at intervals in the light color corresponding to each of the state parameters according to a preset sequence, thereby forming the target light effect.

In another example, not part of the present invention, when there are multiple illuminating lamps 500 in the storage compartment, each of the illuminating lamps 500 corresponds to a state parameter, and the step that the multiple state parameters are matched to obtain a target light effect adapted to the state parameters may further include that: the multiple state parameters are matched with corresponding state parameter threshold ranges respectively to obtain a light effect corresponding to each of the state parameters; and the multiple illuminating lamps 500 are enabled to emit light according to the light effect corresponding to one state parameter respectively, thereby forming the target light effect.

Step S310, the illuminating lamp 500 is driven to emit light according to the target light effect.

Step S312, attribute information of an object to be stored is acquired. An object information collector 100 acquires label information of the object to be stored or image information of the object to be stored to obtain the attribute information of the object to be stored.

Step S314, state parameters inside multiple storage compartments are acquired.

Step S316, storage priorities of the multiple storage compartments are determined according to the attribute information and the state parameters inside the multiple storage compartments.

The step that an available storage compartment for the object to be stored is determined according to the attribute information and the state parameters inside the multiple storage compartments includes that: a preset storage condition of the object to be stored is determined according to the attribute information; and the state parameters of the multiple storage compartments are matched with the preset storage condition to obtain the storage priorities of the multiple storage compartments.

Step S318, an available storage compartment for the object to be stored is determined. The storage compartment with the highest storage priority is determined as the available storage compartment.

Step S320, the illuminating lamp 500 in the available storage compartment is turned on. The illuminating lamp 500 in the available storage compartment is switched from a standby state to an operating state and illuminates the storage compartment. The illuminating lamps 500 in the other storage compartments may be switched from the standby state to an off state.

After the available storage compartment is illuminated, the light of the illuminating lamp 500 may prompt a user to store the object to be stored in the available storage compartment. Therefore, the user may open a door body of the available storage compartment under the guide of the light, and store the object to be stored at a proper position rapidly.

By using the method, the refrigerator 10 of the present invention, when receiving a storage environment checking command, may enable the illuminating lamp 500 to emit light to present various parameters of a storage environment in each storage compartment to the user, so that the user may know a storage situation of each storage compartment conveniently, intuitively, and efficiently, and further discover abnormal conditions timely. The refrigerator 10 of an example, not part of the present invention, when receiving an object storage command, may enable the illuminating lamp 500 to emit light to show an available position to the user, thereby implementing the intelligent storage of the refrigerator 10.

## Claims

1. A control method for a refrigerator (10), comprising:
acquiring a wake-up instruction for an illuminating lamp (500) of the refrigerator (10);
determining whether the wake-up instruction is a storage environment checking command received by the refrigerator (10);
acquiring, if YES, state parameters inside the refrigerator (10); and
adjusting a light state of the illuminating lamp (500) according to the state parameters, wherein
the state parameters comprise temperature, humidity and gas composition; **characterized in that**
the step of adjusting a light state of the illuminating lamp (500) according to the state parameters comprises:
determining a hue, brightness, and saturation of a light color according to temperature, humidity, and gas composition in the refrigerator (10) respectively, and driving the illuminating lamp (500) to emit light according to the hue, the brightness, and the saturation.

2. The control method according to claim 1, wherein the step of determining a hue, brightness, and saturation of a light color according to temperature, humidity, and gas composition in the refrigerator (10) respectively comprises:
matching the temperature with multiple preset temperature threshold ranges, and determining the hue according to the temperature threshold range that the temperature belongs to, a corresponding hue being pre-configured for each of the temperature threshold ranges;
matching the humidity with multiple preset humidity threshold ranges, and determining the brightness according to the humidity threshold range that the humidity belongs to, corresponding brightness being pre-configured for each of the humidity threshold ranges; and
matching a content of a specific gas in the gas composition with preset content threshold ranges of the gas, and determining the saturation according to the content threshold range that the content of the specific gas belongs to, a corresponding saturation being pre-configured for each of the content threshold ranges.

3. A refrigerator (10), comprising:
a cabinet, in which is formed a storage compartment; and
a control device (400), comprising a processor (410) and a memory (420), wherein the memory (420) stores a control program (421), and when being executed by the processor (410), the control program (421) is used for implementing the control method according to any one of claims 1-2.

## Patentansprüche

1. Steuerverfahren für einen Kühlschrank (10), umfassend:
Erfassen eines Weckbefehls für eine Beleuchtungslampe (500) des Kühlschranks (10);
Bestimmen, ob der Weckbefehl ein vom Kühlschrank (10) empfangener Befehl zur Überprüfung der Aufbewahrungsumgebung ist;
Erfassen, falls JA, Zustandsparameter im Inneren des Kühlschranks (10); Und
Einstellen eines Lichtzustands der Beleuchtungslampe (500) gemäß den Zustandsparametern, wobei die Zustandsparameter die Temperatur, die Feuchtigkeit und die Gaszusammensetzung umfassen; **dadurch gekennzeichnet, dass**
der Schritt des Einstellen eines Lichtzustands der Beleuchtungslampe (500) gemäß den Zustandsparametern umfasst:
Bestimmen eines Farbtons, einer Helligkeit und einer Sättigung einer Lichtfarbe gemäß der Temperatur, der Feuchtigkeit bzw. der Gaszusammensetzung in dem Kühlschrank (10) und Ansteuern der Beleuchtungslampe (500), um Licht gemäß dem Farbton, der Helligkeit und der Sättigung zu emittieren.

2. Steuerverfahren nach Anspruch 1, wobei Der Schritt des Bestimmens eines Farbtons, einer Helligkeit und einer Sättigung einer Lichtfarbe gemäß der Temperatur, der Feuchtigkeit bzw. der Gaszusammensetzung in dem Kühlschrank (10) umfasst:
Anpassen der Temperatur an mehrere voreingestellte Temperaturschwellenbereiche und Bestimmen des Farbtons entsprechend dem Temperaturschwellenbereich, zu dem die Temperatur gehört, wobei für jeden der Temperaturschwellenbereiche ein entsprechender Farbton vorkonfiguriert wird;
Anpassen der Feuchtigkeit an mehrere voreingestellte Feuchtigkeitsschwellenbereiche und Bestimmen der Helligkeit entsprechend dem Feuchtigkeitsschwellenbereich, zu dem die Feuchtigkeit gehört, wobei für jeden der Feuchtigkeitsschwellenbereiche eine entsprechende Helligkeit vorkonfiguriert wird; und
Anpassen eines Gehalts eines spezifischen Gases in der Gaszusammensetzung an voreingestellte Gehaltsschwellenbereiche des Gases und Bestimmen der Sättigung gemäß dem Gehaltsschwellenbereich, zu dem der Gehalt des spezifischen Gases gehört, wobei für jeden Gehaltsschwellenbereiche des Gases eine entsprechende Sättigung vorkonfiguriert wird.

3. Kühlschrank (10), umfassend:
ein Schrank, in dem ein Aufbewahrungsfach ausgebildet ist; und
eine Steuervorrichtung (400), die einen Prozessor (410) und einen Speicher (420) umfasst,
wobei der Speicher (420) ein Steuerprogramm (421) speichert und das Steuerprogramm (421), wenn es von dem Prozessor (410) ausgeführt wird, zur Implementierung des Steuerverfahrens nach einem der Ansprüche 1 bis 2 verwendet wird.

## Revendications

1. Procédé de contrôle pour un réfrigérateur (10), comprenant:
la réception d'une instruction de réveil pour une lampe d'éclairage (500) du réfrigérateur (10);
la détermination de si l'instruction de réveil est une commande de vérification de l'environnement de stockage reçue par le réfrigérateur (10);
l'acquisition, si OUl, des paramètres d'état à l'intérieur du réfrigérateur (10); et
l'ajustement d'un état d'éclairage de la lampe d'éclairage (500) en fonction des paramètres d'état, dans lequel
les paramètres d'état comprenant la température, l'humidité et la composition gazeuse; **caractérisé en ce que**
l'étape d'ajustement d'un état d'éclairage de la lampe d'éclairage (500) en fonction des paramètres d'état comprenant:
la détermination d'une teinte, d'une luminosité et d'une saturation d'une couleur de lumière en fonction respectivement de la température, de l'humidité et de la composition gazeuse dans le réfrigérateur (10), et le pilotage de la lampe d'éclairage (500) pour qu'elle émette de la lumière en fonction de la teinte, de la luminosité et de la saturation.

2. Procédé de contrôle selon la revendication 1, dans lequel l'étape de détermination d'une teinte, d'une luminosité et d'une saturation d'une couleur de lumière en fonction respectivement de la température, de l'humidité et de la composition gazeuse dans le réfrigérateur (10) comprend:
la correspondance de la température avec plusieurs plages de seuil de température prédéfinies, et la détermination de la teinte en fonction de la plage de seuil de température à laquelle appartient la température, une teinte correspondante étant préconfigurée pour chacune des plages de seuil de température;
la correspondance de l'humidité avec plusieurs plages de seuil d'humidité prédéfinies, et la détermination de la luminosité en fonction de la plage de seuil d'humidité à laquelle appartient l'humidité, une luminosité correspondante étant préconfigurée pour chacune des plages de seuil d'humidité; et
la correspondance d'une teneur d'un gaz spécifique dans la composition gazeuse avec des plages de seuil de teneur prédéfinies du gaz, et la détermination de la saturation en fonction de la plage de seuil de teneur à laquelle appartient la teneur du gaz spécifique, une saturation correspondante étant préconfigurée pour chacune des plages de seuil de teneur.

3. Réfrigérateur (10), comprenant:
une armoire, dans laquelle est formé un compartiment de stockage; et
un dispositif de commande (400), comprenant un processeur (410) et une mémoire (420), la mémoire (420) stockant un programme de commande (421), et lorsque celui-ci est exécuté par le processeur (410), le programme de commande (421) est utilisé pour mettre en oeuvre le procédé de contrôle selon l'une quelconque des revendications 1 à 2.
